(19) Europäisches Patentamt
European Patent Office
Office européen des brevets

(11) **EP 3 176 726 A1**

(12) **EUROPEAN PATENT APPLICATION**
published in accordance with Art. 153(4) EPC

(43) Date of publication:
**07.06.2017 Bulletin 2017/23**

(51) Int Cl.:
***G06K 9/00*** (2006.01)

(21) Application number: **15758190.1**

(22) Date of filing: **23.01.2015**

(86) International application number:
**PCT/CN2015/071504**

(87) International publication number:
**WO 2015/131710 (11.09.2015 Gazette 2015/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.07.2014 CN 201410364060**

(71) Applicant: **ZTE Corporation
Shenzhen, Guangdong 518057 (CN)**

(72) Inventors:
• **LU, Ping
Shenzhen
Guangdong 518057 (CN)**

• **SUN, Jian
Shenzhen
Guangdong 518057 (CN)**
• **JIA, Xia
Shenzhen
Guangdong 518057 (CN)**
• **JIN, Lizuo
Shenzhen
Guangdong 518057 (CN)**
• **WU, Wenjing
Shenzhen
Guangdong 518057 (CN)**

(74) Representative: **HGF Limited
4th Floor
Merchant Exchange
17-19 Whitworth Street West
Manchester M1 5WG (GB)**

(54) **METHOD AND DEVICE FOR POSITIONING HUMAN EYES**

(57)      A method and device for positioning human eyes are disclosed. The method includes: acquiring an input image; performing grayscale processing to the image to extract a grayscale feature; extracting a candidate human eye area in the image by employing a center-periphery contrast filter algorithm according to the grayscale feature; extracting left and right eye candidate areas respectively from the candidate human eye area through a pre-created human eye statistical model; and checking pairing on the left and right eye candidate areas to determine positions of left and right eyes.

FIG. 1

## Description

Technical Field

The present invention relates to the field of image recognition technology, and more particularly, to a method and device for positioning human eyes by multi-cue fusion.

Background

The human eye is a key and obvious visual feature in face features, and often reflects key information such as the emotional expression of the target individual or line of sight of attention. Human eye detection and positioning plays an important role in the research such as face recognition, expression recognition and attention estimation, and is an indispensable important part in the face analysis technology.

Human eye detection and positioning mainly researches about whether the target imaging, especially the image containing figures, contains eyes, and if contained, the eyes are accurately positioned. The human eye positioning algorithm is an accurate analysis of human eye detection, and often only contains a small number of pixels to reflect the confidence boundary of the position.

The positioning accuracy of the traditional human eye positioning algorithm is influenced by the factors such as the target attitude, expression and occlusion from itself. Herein, the main factors influencing the human eye positioning include: (1) changes in the facial expression of the target; (2) target occlusion; (3) changes in the target attitude; (4) target imaging conditions; (5) suspected background, etc. At present, the commonly used eye positioning algorithms include: an edge feature extraction method, a classifier based detection method, a grayscale integral projection method, a template matching method, a Hough-transform based detection method and so on.

However, there are shortcomings of inaccurate positioning in these existing positioning algorithms; and some positioning algorithms have a large calculated amount and a high cost.

Summary

The embodiments of the present invention provide a method and device for positioning human eyes to solve the problem of inaccuracy on detecting and positioning of the human eyes.

A method for positioning human eyes includes: acquiring an input image, performing grayscale processing to the image to extract a grayscale feature, extracting a candidate human eye area in the image by employing a center-periphery contrast filter algorithm according to the grayscale feature, extracting left and right eye candidate areas respectively from the candidate human eye area through a pre-created human eye statistical model, and checking pairing on the left and right eye candidate areas to determine positions of left and right eyes.

In an exemplary embodiment, before the step of acquiring an input image, the method further includes: creating the human eye statistical model, which specifically includes: establishing a human eye statistical model data set based on a collected image database containing human eyes, performing normalization processing of data to the human eye statistical model data set, mapping a data vector after the normalization processing to a feature space using a principal component analysis method, and selecting a feature subspace, and establishing a fast human eye statistical model based on the feature subspace and an accurate human eye statistical model based on SVM classification.

In an exemplary embodiment, the step of extracting left and right eye candidate areas respectively from the candidate human eye area through a pre-created human eye statistical model includes: for the candidate human eye area, employing the fast human eye statistical model based on the feature subspace to perform a preliminary judgment of the left and right eye candidate areas, further differentiating an area between two judgment thresholds set by the fast human eye statistical model by employing the accurate human eye statistical model based on the SVM classification, and acquiring the left and right eye candidate areas respectively.

In an exemplary embodiment, the step of extracting left and right eye candidate areas respectively from the candidate human eye area through a pre-created human eye statistical model further includes: employing the fast human eye statistical model and the accurate human eye statistical model repeatedly to perform a multi-scale detection fusion for the candidate human eye area, and performing mass filtering processing to a fusion confidence map obtained by performing the multi-scale detection fusion to acquire a final confidence map as the left and right eye candidate areas.

In an exemplary embodiment, the step of checking pairing on the left and right eye candidate areas to determine positions of left and right eyes includes: checking pairing on the left and right eye candidate areas in turn by reference to a face area, screening pairs of the left and right eyes in conformity with geometric constraints according to relative position and direction of the left and right eye candidate areas, and acquiring confidences of both eyes in terms of distance and angle by calculation, performing template matching on the left and right eye candidate areas by using a predefined binocular template, and acquiring a matching confidence, and in combination with the confidences of both eyes in terms of distance and angle and the matching confidence, selecting a position of a pair of left and right eyes in which a value of a product of three confidences is maximum, and taking the position as a final position of the left and right eyes.

A device for positioning human eyes includes:

an image acquiring module, arranged to acquire an input image, a first extracting module arranged to perform grayscale processing to the image to extract a grayscale feature, a second extracting module arranged to extract a candidate human eye area in the image by employing a center-periphery contrast filter algorithm according to the grayscale feature, a third extracting module arranged to extract left and right eye candidate areas respectively from the candidate human eye area through a pre-created human eye statistical model, and a positioning module arranged to check pairing on the left and right eye candidate areas to determine positions of left and right eyes.

In an exemplary embodiment, the device further includes: a model creating module arranged to create the human eye statistical model. The model creating module includes: a data set establishing unit arranged to establish a human eye statistical model data set based on a collected image database containing human eyes, a processing unit arranged to perform normalization processing of data to the human eye statistical model data set, an analysis selecting unit arranged to map a data vector after the normalization processing to a feature space using a principal component analysis method, and select a feature subspace, and a model establishing unit arranged to establish a fast human eye statistical model based on the feature subspace and an accurate human eye statistical model based on SVM classification.

In an exemplary embodiment, the third extracting module is further arranged to: for the candidate human eye area, employ the fast human eye statistical model based on the feature subspace to perform a preliminary judgment of the left and right eye candidate areas; and further differentiate an area between two judgment thresholds set by the fast human eye statistical model by employing the accurate human eye statistical model based on the SVM classification, and acquire the left and right eye candidate areas respectively.

In an exemplary embodiment, the third extracting module is further arranged to: employ the fast human eye statistical model and the accurate human eye statistical model repeatedly to perform a multi-scale detection fusion for the candidate human eye area; and perform mass filtering processing to a fusion confidence map obtained by performing the multi-scale detection fusion to acquire a final confidence map as the left and right eye candidate areas.

In an exemplary embodiment, the positioning module includes: a geometric position checking unit, arranged to check pairing on the left and right eye candidate areas in turn by reference to a face area, screen pairs of the left and right eyes in conformity with geometric constraints according to relative position and direction of the left and right eye candidate areas, and acquire confidences of both eyes in terms of distance and angle by calculation; a template matching checking unit, arranged to perform template matching on the left and right eye candidate areas by using a predefined binocular template, and acquire a matching confidence; and a calculation selecting unit, arranged to: in combination with the confidences of both eyes in terms of distance and angle and the matching confidence, select a position of a pair of left and right eyes in which a value of a product of three confidences is maximum, and take the position as a final position of the left and right eyes.

An embodiment of the present invention also provides a computer-readable storage medium, storing program instructions to be executed for implementing the abovementioned method.

The embodiments of present invention provide a method and device for positioning human eyes. The grayscale processing is performed on the image to extract a grayscale feature. A candidate human eye area in the image is extracted by employing the center-periphery contrast filter algorithm according to the grayscale feature. The left and right eye candidate areas are extracted respectively from the candidate human eye area through a pre-created human eye statistical model. Finally, the pairing is checked on the left and right eye candidate areas to determine the positions of left and right eyes. Thus, the problem of inaccuracy on detecting and positioning of the human eyes in the related art is solved based on the solution of positioning the human eyes by multi-cue fusion.

Brief Description of Drawings

FIG. 1 is flow chart of a method for positioning human eyes according to an embodiment of the present invention;

FIG. 2 is flow chart of a method for positioning human eyes according to another embodiment of the present invention;

FIG. 3 is a flow chart of offline training of a human eye statistical model according to an embodiment of the present invention;

FIG. 4 is a flow chart of human eye online detection positioning according to an embodiment of the present invention;

FIG. 5a and 5b are respectively schematic diagrams of a geometric relationship of a pair of left and right eyes according to an embodiment of the present invention;

FIG. 6 is a schematic diagram of function modules of a device for positioning human eyes according to an embodiment of the present invention;

FIG. 7 is a structure schematic diagram of a positioning module in a device for positioning human eyes according to an embodiment of the present invention;

FIG. 8 is a schematic diagram of function modules of a device for positioning human eyes according to another embodiment of the present invention; and

FIG. 9 is a structure schematic diagram of a model creating module in a device for positioning human eyes according to an embodiment of the present invention.

In order to make the technical solution of the present invention clearer, the following will be described in detail with reference to the accompanying drawings.

Detailed Description

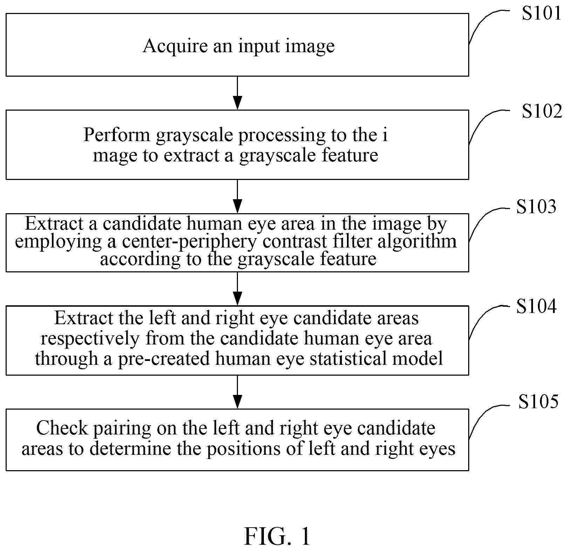

It is to be understood that the specific embodiments described herein are for the purpose of explaining the present invention and are not intended to be limiting of the present invention.
The solution of the embodiments of the present invention mainly includes that: grayscale processing is performed on an image to extract a grayscale feature, a candidate human eye area in the image is extracted by employing a center-periphery contrast filter algorithm according to the grayscale feature, left and right eye candidate areas are extracted respectively from the candidate human eye area through a pre-created human eye statistical model, and finally, pairing is checked on the left and right eye candidate areas to determine positions of left and right eyes. The solution solves the problem in the related art that detecting and positioning of the human eyes are inaccurate.
As shown in FIG. 1, an embodiment of the present invention provides a method for positioning human eyes, including the following steps.
In step S101: An input image is acquired.
In step S102: The grayscale processing is performed on the image to extract a grayscale feature.
The execution environment of the method of the present embodiment relates to a device or a terminal having an image processing function. Since detecting and positioning of the human eyes are not accurate in the related art, the solution of the present embodiment can improve the accuracy of detecting and positioning of the human eyes. The solution is mainly divided into offline learning of human eye models and online positioning of human eyes. Herein, the offline learning of human eye statistical models can be completed in advance, and mainly includes that the following: establishing a human eye statistical model data set, establishing a human eye statistical model feature space, establishing a fast human eye statistical model based on a subspace, and establishing an accurate human eye statistical model based on support vector machine (SVM) classification.
The present embodiment has completed the offline learning of human eye statistical models by default, and mainly relates to the online positioning of human eyes.
First, the input image is acquired, the grayscale processing is performed to the input image, and a grayscale feature is extracted. Subsequently, it is convenient for extracting a candidate human eye area in the image according to the grayscale feature.
In step S103: A candidate human eye area in the image is extracted by employing a center-periphery contrast filter algorithm according to the grayscale feature.
The center-periphery contrast filter is adopted to extract the candidate human eye area according to the grayscale feature.
In step S104: Left and right eye candidate areas are extracted respectively from the candidate human eye area through a pre-created human eye statistical model.
In step S105: Pairing is checked on the left and right eye candidate areas to determine the positions of left and right eyes.
The human eyes are represented by using a principal component feature. For the left and right eyes, the left and right eye candidate areas are extracted respectively from the candidate human eye area through a human eye classifier established by the support vector machine.
Then, the pairing is checked on the left and right eye candidate areas in turn by reference to a face area, and pairs of left and right eyes in conformity with geometric constraints are screened according to the relative position and direction thereof.
Finally, a preset grayscale feature template is used to represent both eyes, the pairs of the left and right eyes are checked and the optimal matching position is determined.
The human eye statistical model in the abovementioned step S104 is offline learned from a large number of samples. The creation procedure thereof includes the following steps.
First, a human eye statistical model data set is established based on a collected image database containing human eyes. Then, normalization processing of data is performed to the human eye statistical model data set. A data vector after the normalization processing is mapped to a feature space using a principal component analysis method, and a feature subspace is selected. Finally, a fast human eye statistical model based on the feature subspace and an accurate human eye statistical model based on SVM classification are established.
More specifically, based on the abovementioned created human eye statistical model, as an implementation, a procedure of the abovementioned step S104 is as follows.
First, for the candidate human eye area, the fast human eye statistical model based on the feature subspace is employed to perform a preliminary judgment of the left and right eye candidate areas. According to a result of the preliminary judgment, an area between two judgment thresholds set by the fast human eye statistical model is further differentiated by employing the accurate human eye statistical model based on the SVM classification to acquire the left and right eye candidate areas respectively.

Herein, the fast human eye statistical model and the accurate human eye statistical model may also be repeatedly employed for the candidate human eye area to perform a multi-scale detection fusion; and mass filtering processing is performed to a fusion confidence map obtained by performing the multi-scale detection fusion, a final confidence map is acquired as the left and right eye candidate areas.

The procedure of the abovementioned step S105 is as follows.

First, the pairing is checked on the left and right eye candidate areas in turn by reference to the face area. The pairs of the left and right eyes in conformity with geometric constraints are screened according to the relative position and direction of the left and right eye candidate areas. And the confidences of both eyes in terms of distance and angle are acquired by calculation.

Then, template matching is performed on the left and right eye candidate areas by using a predefined binocular template, and a matching confidence is acquired.

Finally, in combination with the confidences of both eyes in terms of distance and angle and the matching confidence, a position of a pair of left and right eyes in which a value of a product of three confidences is maximum is selected, and the position is taken as a final position of the left and right eyes.

With the abovementioned solution, the embodiments of the present invention perform the grayscale processing on the image to extract the grayscale feature; employ a center-periphery contrast filter algorithm to extract a candidate human eye area in the image according to the grayscale feature; extract left and right eye candidate areas respectively from the candidate human eye area through a pre-created human eye statistical model; and finally, check pairing on the left and right eye candidate areas to determine the positions of left and right eyes. Thus, the problem of inaccuracy on detecting and positioning of the human eyes in the related art is solved based on the solution of positioning the human eyes by multi-cue fusion.

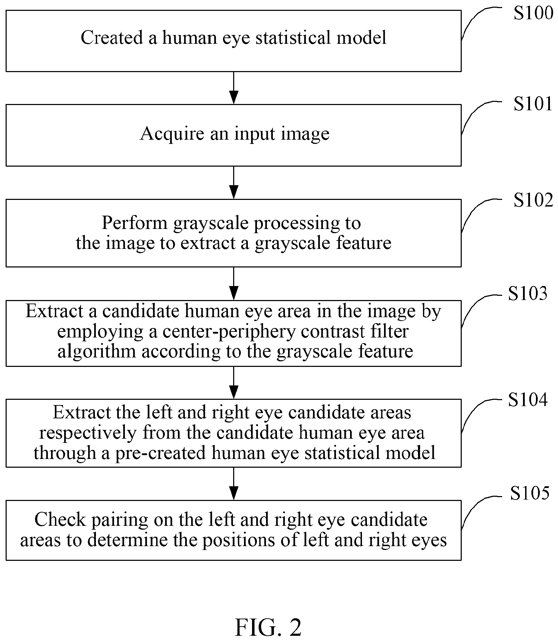

As shown in FIG. 2, another embodiment of the present invention provides a method for positioning human eyes. On the basis of the embodiment shown in FIG. 1, before the abovementioned step S101 of acquiring an input image, the method further includes the following step:

In step S100: A human eye statistical model is created.

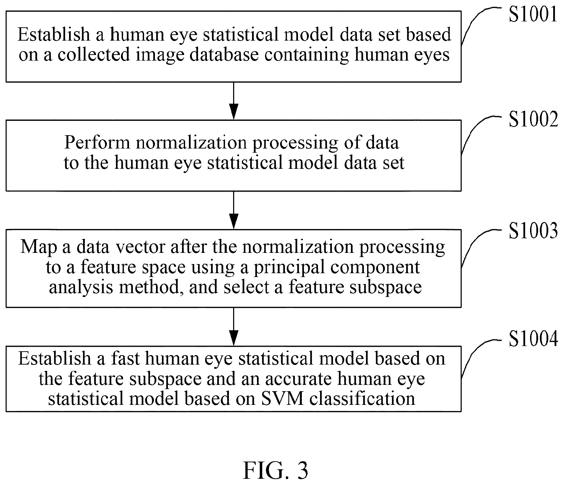

As shown in FIG. 3, the abovementioned step S100 may includes the following steps.

Step S1001: the human eye statistical model data set is established based on the collected image database containing human eyes.

The positive and negative training samples are divided from the image database containing human eyes. First, the face images are normalized to a certain size range, and then the images are rotated seven times according to [-15°, -10°, -5°, 0°, 5°, 10°, 15°]. The left or right eye areas are labeled on the rotated image according to the size of 11x17 pixels. The labeled area is extracted as a positive sample image of the human eye statistical model training.

Herein, the right eye image is folded and processed, so that the image is unified as the left eye image. The area except for human eyes is pre-selected as a negative sample image of the model training according to the same pixel size.

Step S1002: The normalization processing of data is performed to the human eye statistical model data set.

In the image data acquired in the abovementioned Step S1001, the integer-type image $x_i$ is quantized into a real vector $x_i$ whose mean value is 0 and variance is 1, and includes: $\tilde{x}_i = \dfrac{x_i - mean(x_i)}{\text{cov}(x_i)}$, where $mean(*)$ is acquiring the mean value, and $cov(*)$ is acquiring the variance.

Step S1003: The data vector after the normalization processing is mapped to the feature space using a principal component analysis method, and the feature subspace is selected.

The processed vectors $\tilde{X} = (\tilde{x}_1 \tilde{x}_2 \cdots \tilde{x}_n)^T$ are mapped into the feature space using the principal component analysis (PCA) method, $Y = U\tilde{X}$, where $U$ is the eigenvector of the covariance matrix of $\tilde{X}$, $U^T U = \sum^{-1}$.

Then, the feature subspace is selected. The positive and negative samples are mapped to the feature space, including that: if the positive and negative sample sets are defined as $\tilde{X}^+$, $\tilde{X}^-$ respectively, the positive and negative features are $Y^+ = U\tilde{X}^+, Y^- = U\tilde{X}^-$ respectively, the mean value $\mu_i^+$, $\mu_i^-$ and the variance $\sigma_i^+, \sigma_i^-$ of each dimension are counted respectively, the Fisher discriminant score $FCS(i) = \dfrac{\left| \mu_i^+ - \mu_i^- \right|}{\sigma_i^+ + \sigma_i^-}$ is calculated, the mapping matrix is arranged in a descending order of the eigenvalues, and the former M-dimension with the largest Fisher discriminant score is selected as the feature subspace.

Step S1004: The fast human eye statistical model based on the feature subspace and the accurate human eye statistical model based on SVM classification are established.

A fast human eye statistical model based on subspace is established. The feature accumulation value $DIFS = \sum_1^M y_i$ of the former M-dimension of the eigenvector Y is calculated, and the threshold value is defined as the discrimination threshold. The discrimination threshold is selected as (MEAN $\pm$ SD, MEAN $\pm$ 3 $\times$ SD), where MEAN is the statistical mean value, and SD is the statistical variance.

An accurate human eye statistical model based on SVM classification is established. SVM method with RBF kernel is used to train the classifier to the feature of the former N-dimension of vector Y. The method includes that: 5000 samples are randomly selected from the positive and negative sample sets, and the classifier parameters c, $\sigma$ and N are acquired by 5-fold cross validation. The trained SVM classifier is used to classify the total samples, and the misclassified negative samples are brought into retraining the SVM classifier as the final classifier.

The human eye statistic model trained by the above steps can be used to position the human eye of multi-cue fusion accurately.

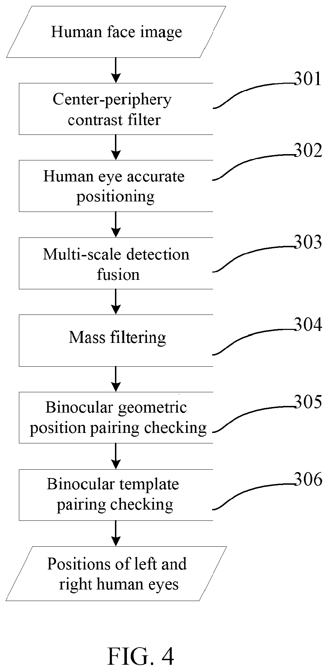

Based on the abovementioned created human eye statistical model, the procedure of on-line accurate positioning of the human eyes of the present embodiment is described in detail as follows. As shown in FIG. 4, the procedure includes the following steps.

Step 301: The human eye candidate area is extracted. The actual image to be detected is normalized to a certain size, and a center-periphery contrast filter is employed to extract a candidate human eye area.

Step 302: About the human eye accurate positioning, the sub-image of 11x17 size is densely sampled in the candidate human eye area image, the eigenvector of the former M-dimension is extracted using the transformation method in Step S1002 and according to the method in Step S1003, and the threshold acquired using the training in Step S1004 is judged to be positive if the DIFS value belongs to MEAN $\pm$ SD, and is judged to be negative if the DIFS value does not belong to MEAN $\pm$ 3 $\times$ SD. If the threshold is between MEAN $\pm$ SD and MEAN $\pm$ 3 $\times$ SD, the SVM classifier trained in Step S1004 is used to acquire the left and right eye candidate areas, respectively.

Step 303: About multi-scale detection fusion, step 302 is repeated at the multi-scale for the same image to be detected, and a fusion confidence map is acquired from the confidence map according to a manner of "OR". The morphological filtering is performed on the fusion confidence map with an open operation, and the connected domain masses are labeled using a 8-like connectivity method.

Step 304: About mass filtering, a pre-defined threshold is used to remove the small blocks and the irrelevant blocks are further removed from the remaining clumps according to the principle that the adjacent blocks have similar sizes to acquire the final confidence map as a candidate area.

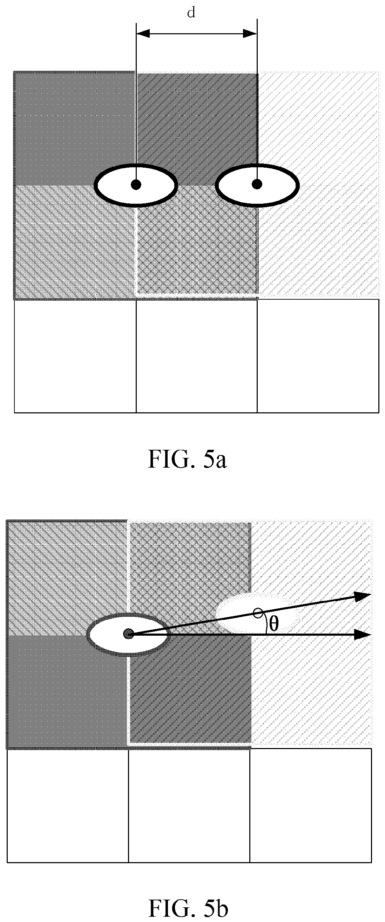

Step 305: About binocular geometric position pairing checking, the pairing is checked on the left and right eye candidate areas in turn by reference to the face area, and the left and right eye pairs in conformity with geometric constraints are screened according to the relative position and direction of the left and right eye candidate areas; the method includes that: the face area is divided into nine sub-blocks equally according to the priori left and right positions of human eyes, as shown in FIG. 5a and FIG. 5b, where the upper left 2/3 area is the right eye feasible area, and the upper right 2/3 area is the left eye feasible area. As shown in FIG. 5a, the sub-blocks that fall within the central position of the block of the candidate area and have an interval satisfying $d \in [d_{min}, d_{max}]$ is kept as the matching point pair, and the binocular confidence thereof is defined as $S_d = k_d * abs(d - 0.5 * (d_{max} + d_{min}))$. As shown in FIG. 5b, the sub-blocks in which the included angle of the central points between the blocks satisfy $\theta \in [\theta_{min}, \theta_{max}]$ is kept as the matching point pair, and the binocular confidence is defined as $S_\theta = k_\theta * abs(\theta - 0.5 * (\theta_{max} + \theta_{min}))$.

Step 306: About binocular template pairing checking, template matching is performed on the candidate areas by using a predefined binocular template, the confidence is defined as $S_{template}$ and is finally defined as the maximum position point of quadrature of the three confidences as the left and right eye positions.

With the abovementioned solution, the embodiments of the present invention perform the grayscale processing on the image to extract the grayscale feature; employ a center-periphery contrast filter algorithm to extract a candidate human eye area in the image according to the grayscale feature; extract left and right eye candidate areas respectively from the candidate human eye area through a pre-created human eye statistical model; and finally, check pairing on the left and right eye candidate areas to determine the positions of left and right eyes. Thus, the problem of inaccuracy on detecting and positioning of the human eyes in the related art is solved based on the solution of positioning the human eyes by multi-cue fusion.

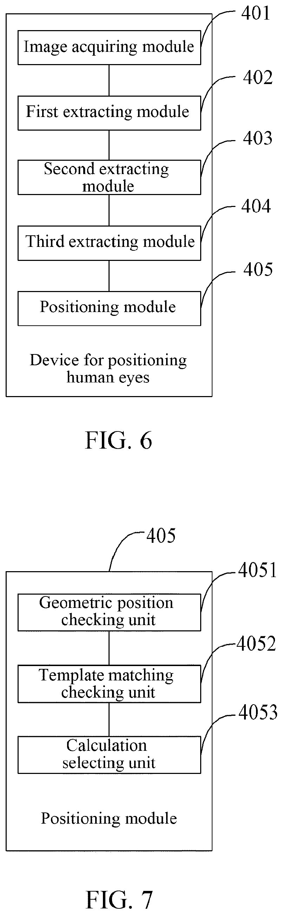

As shown in FIG. 6, another embodiment of the present invention provides a device for positioning human eyes, and the device includes an image acquiring module 401, a first extracting module 402, a second extracting module 403, a third extracting module 404, and a positioning module 405.

The image acquiring module 401 is arranged to acquire an input image.

The first extracting module 402 is arranged to perform grayscale processing to the image to extract a grayscale feature.

The second extracting module 403 is arranged to extract a candidate human eye area in the image by employing a center-periphery contrast filter algorithm according to the grayscale feature.

The third extracting module 404 is arranged to extract left and right eye candidate areas respectively from the candidate human eye area through a pre-created human eye statistical model.

The positioning module 405 is arranged to check pairing on the left and right eye candidate areas to determine positions of left and right eyes.

Since detecting and positioning of the human eyes are not accurate in the related art, the solution of the present embodiment can improve the accuracy of detecting and positioning of the human eyes. The solution is mainly divided into offline learning of human eye models and online positioning of human eyes. Herein, the offline learning of human eye statistical models can be completed in advance, and mainly includes that the following: establishing a human eye statistical model data set, establishing a human eye statistical model feature space, establishing a fast human eye statistical model based on a subspace, and establishing an accurate human eye statistical model based on SVM classification.

The present embodiment has completed the offline learning of human eye statistical models by default, and mainly relates to the online positioning of human eyes.

First, the input image is acquired, the grayscale processing is performed to the input image, and a grayscale feature is extracted.

Then, the center-periphery contrast filter is adopted to extract the candidate human eye area according to the grayscale feature.

The human eyes are represented by using a principal component feature. For the left and right eyes, the left and right eye candidate areas are extracted respectively from the candidate human eye area through a human eye classifier established by the support vector machine.

Then, the pairing is checked on the left and right eye candidate areas in turn by reference to a face area, and pairs of left and right eyes in conformity with geometric constraints are screened according to the relative position and direction thereof.

Finally, a preset grayscale feature template is used to represent both eyes, the pairs of the left and right eyes are checked and the optimal matching position is determined.

The abovementioned human eye statistical model is offline learned from a large number of samples. The creation procedure thereof includes the following steps.

First, a human eye statistical model data set is established based on a collected image database containing human eyes. Then, normalization processing of data is performed to the human eye statistical model data set. A data vector after the normalization processing is mapped to a feature space using a principal component analysis method, and a feature subspace is selected.

Finally, a fast human eye statistical model based on the feature subspace and an accurate human eye statistical model based on SVM classification are established.

Based on the abovementioned created human eye statistical model, as an implementation, the third extracting module 404 is further arranged to: for the candidate human eye area, employ the fast human eye statistical model based on the feature subspace to perform a preliminary judgment of the left and right eye candidate areas; and further differentiate an area between two judgment thresholds set by the fast human eye statistical model by employing the accurate human eye statistical model based on the SVM classification, and acquire the left and right eye candidate areas respectively.

The third extracting module 404 is further arranged to: employ the fast human eye statistical model and the accurate human eye statistical model repeatedly to perform a multi-scale detection fusion for the candidate human eye area; and perform mass filtering processing to a fusion confidence map obtained by performing the multi-scale detection fusion to acquire a final confidence map as the left and right eye candidate areas.

The positioning module 405 is further arranged to: check pairing on the left and right eye candidate areas in turn by reference to a face area, screen pairs of the left and right eyes in conformity with geometric constraints according to relative position and direction of the left and right eye candidate areas, and acquire confidences of both eyes in terms of distance and angle by calculation; then, perform template matching on the left and right eye candidate areas by using a predefined binocular template, and acquire a matching confidence; and finally, in combination with the confidences of both eyes in terms of distance and angle and the matching confidence, select a position of a pair of left and right eyes in which a value of a product of three confidences is maximum, and take the position as a final position of the left and right eyes.

As shown in FIG. 7, the positioning module 405 includes a geometric position checking unit 4051, a template matching checking unit 4052, and a calculation selecting unit 4053.

The geometric position checking unit 4051 is arranged to check pairing on the left and right eye candidate areas in turn by reference to a face area, screen pairs of the left and right eyes in conformity with geometric constraints according to relative position and direction of the left and right eye candidate areas, and acquire confidences of both eyes in terms of distance and angle by calculation.

The template matching checking unit 4052 is arranged to perform template matching on the left and right eye candidate areas by using a predefined binocular template, and acquire a matching confidence.

The calculation selecting unit 4053 is arranged to: in combination with the confidences of both eyes in terms of distance and angle and the matching confidence, select a position of a pair of left and right eyes in which a value of a product of three confidences is maximum, and take the position as a final position of the left and right eyes.

With the abovementioned solution, the embodiments of the present invention perform the grayscale processing on the image to extract the grayscale feature; employ a center-periphery contrast filter algorithm to extract a candidate human eye area in the image according to the grayscale feature; extract left and right eye candidate areas respectively from the candidate human eye area through a pre-created human eye statistical model; and finally, check pairing on the left and right eye candidate areas to determine the positions of left and right eyes. Thus, the problem of inaccuracy on detecting and positioning of the human eyes in the related art is solved based on the solution of positioning the human eyes by multi-cue fusion.

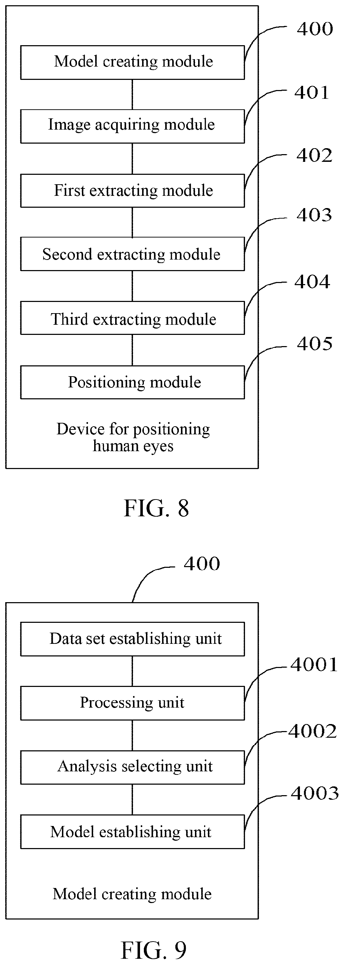

As shown in FIG. 8, another embodiment of the present invention discloses a device for positioning human eyes. On the basis of the embodiment shown in FIG. 6, the device further includes: a model creating module 400 arranged to create a human eye statistical model.

As shown in FIG. 9, the model creating module 400 includes: a data set establishing unit 4001, a processing unit 4002, an analysis selecting unit 4003, and a model establishing unit 4004.

The data set establishing unit 4001 is arranged to establish a human eye statistical model data set based on the collected image database containing human eyes.

The processing unit 4002 is arranged to perform normalization processing of data to the human eye statistical model data set.

The analysis selecting unit 4003 is arranged to map a data vector after the normalization processing to a feature space using a principal component analysis method, and select a feature subspace.

The model establishing unit 4004 is arranged to establish a fast human eye statistical model based on the feature subspace and an accurate human eye statistical model based on SVM classification.

The process of creating the human eye statistical model according to the present embodiment is explained in detail as follows.

First, a human eye statistical model data set is established based on the collected image database containing human eyes.

The positive and negative training samples are divided from the image database containing human eyes. First, the face images are normalized to a certain size range, and then the images are rotated seven times according to [-15°, -10°, -5°, 0°, 5°, 10°, 15°]. The left or right eye areas are labeled on the rotated image according to the size of 11x17 pixels. The labeled area is extracted as a positive sample image of the human eye statistical model training.

Herein, the right eye image is folded and processed, so that the image is unified as the left eye image. The area except for human eyes is pre-selected as a negative sample image of the model training according to the same pixel size.

Then, normalization processing of data is performed to the human eye statistical model data set.

From the abovementioned acquired image data, the integer-type image $x_i$ is quantized into a real vector $\tilde{x}_i$ whose mean value is 0 and variance is 1, and includes:

$$\tilde{x}_i = \frac{x_i - mean(x_i)}{\mathrm{cov}(x_i)}$$, where *mean*(\*) is acquiring the mean value, and cov(\*) is acquiring the variance.

Then, a data vector after the normalization processing is mapped to a feature space using a principal component analysis method, and feature subspace is selected.

The processed vectors $\tilde{X} = (\tilde{x}_1 \tilde{x}_2 \cdots \tilde{x}_n)^T$ are mapped into the feature space using the principal component analysis (PCA) method, $Y = U\tilde{X}$, where $U$ is the eigenvector of the covariance matrix of $\tilde{X}$, $U^TU = \Sigma^{-1}$.

Then, the feature subspace is selected. The positive and negative samples are mapped to the feature space, including that: if the positive and negative sample sets are defined as $\tilde{X}^+$, $\tilde{X}^-$ respectively, the positive and negative features are $Y^+ = U\tilde{X}^+, Y^- = U\tilde{X}^-$ respectively, the mean value $\mu_i^+$, $\mu_i^-$ and the variance $\sigma_i^+$, $\sigma_i^-$ of each dimension are count respectively, the Fisher discriminant score $FCS(i) = \frac{|\mu_i^+ - \mu_i^-|}{\sigma_i^+ + \sigma_i^-}$ is calculated, the mapping matrix is arranged in a descending order of the eigenvalues, and the former M-dimension with the largest Fisher discriminant score is selected as the feature subspace.

Finally, a fast human eye statistical model based on the feature subspace and an accurate human eye statistical model based on SVM classification are established.

First, a fast human eye statistical model based on subspace is established. The feature accumulation value $DIFS = \sum_1^M y_i$ of the former M-dimension of the eigenvector Y is calculated, and the threshold value is defined as the discrimination threshold. The discrimination threshold is selected as (MEAN ± SD, MEAN ± 3 × SD), where MEAN is the statistical mean value and SD is the statistical variance.

Then, an accurate human eye statistical model based on SVM classification is established. SVM method with RBF kernel is used to train the classifier to the feature of the former N-dimension of vector Y. The method includes that: 5000 samples are randomly selected from the positive and negative sample sets, and the classifier parameters c, σ and N are acquired by 5-fold cross validation. The trained SVM classifier is used to classify the total samples, and the misclassified negative samples are brought into retraining the SVM classifier as the final classifier.

The human eye statistic model trained by the above processes can be used to position the human eye of multi-cue fusion accurately.

Those skilled in the art may understand that all or some of the steps in the abovementioned embodiment may be implemented by using a computer program flow. The computer program may be stored in a computer-readable storage medium. The computer program is executed on a corresponding hardware platform (such as a system, an apparatus, a device, a component, etc). During execution, one or a combination of the steps in the method embodiment may be included.

Alternatively, all or some of the steps in the abovementioned embodiment may also be implemented by using an integrated circuit. These steps may be manufactured into integrated circuit modules separately, or a plurality of modules or steps therein may be manufactured into a single integrated circuit module. Thus, the present invention is not limited to any specific hardware and software combination.

Each apparatus / function module / function unit in the abovementioned embodiment may be implemented by using a general calculation apparatus. They may be centralized on a single calculation apparatus, or may also be distributed on a network constituted by a plurality of calculation apparatuses.

When being implemented in form of software function module and sold or used as an independent product, each apparatus / function module / function unit in the abovementioned embodiment may be stored in the computer-readable storage medium. The abovementioned computer-readable storage medium may be a read-only memory, a magnetic disk or a compact disc, etc.

Industrial Applicability

The embodiments of the present invention solve the problem of inaccuracy on detecting and positioning of the human eyes in the related art based on the solution of positioning human eyes by multi-cue fusion.

**Claims**

1. A method for positioning human eyes, comprising:

   acquiring an input image;
   performing grayscale processing to the image to extract a grayscale feature;
   extracting a candidate human eye area in the image by employing a center-periphery contrast filter algorithm according to the grayscale feature;
   extracting left and right eye candidate areas respectively from the candidate human eye area through a pre-created human eye statistical model; and
   checking pairing on the left and right eye candidate areas to determine positions of left and right eyes.

2. The method according to claim 1, wherein, before the step of acquiring an input image, the method further comprises:

   creating the human eye statistical model, comprising:

      establishing a human eye statistical model data set based on a collected image database containing human eyes;
      performing normalization processing of data to the human eye statistical model data set;
      mapping a data vector after the normalization processing to a feature space using a principal component analysis method, and selecting a feature subspace; and
      establishing a fast human eye statistical model based on the feature subspace and an accurate human eye statistical model based on support vector machine (SVM) classification.

3. The method according to claim 2, wherein, the step of extracting left and right eye candidate areas respectively from the candidate human eye area through a pre-created human eye statistical model comprises:

      for the candidate human eye area, employing the fast human eye statistical model based on the feature subspace to perform a preliminary judgment of the left and right eye candidate areas; and
      differentiating an area between two judgment thresholds set by the fast human eye statistical model by employing the accurate human eye statistical model based on the SVM classification, and acquiring the left and right eye candidate areas respectively.

4. The method according to claim 3, wherein, the step of extracting left and right eye candidate areas respectively from the candidate human eye area through a pre-created human eye statistical model further comprises:

      employing the fast human eye statistical model and the accurate human eye statistical model repeatedly to perform a multi-scale detection fusion for the candidate human eye area; and performing mass filtering processing to a fusion confidence map obtained by performing the multi-scale detection fusion to acquire a final confidence map as the left and right eye candidate areas.

5. The method according to any one of claims 1-4, wherein, the step of checking pairing on the left and right eye candidate areas to determine positions of left and right eyes comprises:

checking pairing on the left and right eye candidate areas in turn by reference to a face area, screening pairs of the left and right eyes in conformity with geometric constraints according to relative position and direction of the left and right eye candidate areas, and acquiring confidences of both eyes in terms of distance and angle by calculation;

performing template matching on the left and right eye candidate areas by using a predefined binocular template, and acquiring a matching confidence; and

in combination with the confidences of both eyes in terms of distance and angle and the matching confidence, selecting a position of a pair of left and right eyes in which a value of a product of three confidences is maximum, and taking the position as a final position of the left and right eyes.

6. A device for positioning human eyes, comprising:

an image acquiring module, arranged to acquire an input image;

a first extracting module, arranged to perform grayscale processing to the image to extract a grayscale feature;

a second extracting module, arranged to extract a candidate human eye area in the image by employing a center-periphery contrast filter algorithm according to the grayscale feature;

a third extracting module, arranged to extract left and right eye candidate areas respectively from the candidate human eye area through a pre-created human eye statistical model; and

a positioning module, arranged to check pairing on the left and right eye candidate areas to determine positions of left and right eyes.

7. The device according to claim 6, further comprising:

a model creating module, arranged to create the human eye statistical model; wherein, the model creating module comprises:

a data set establishing unit, arranged to establish a human eye statistical model data set based on a collected image database containing human eyes;

a processing unit, arranged to perform normalization processing of data to the human eye statistical model data set;

an analysis selecting unit, arranged to map a data vector after the normalization processing to a feature space using a principal component analysis method, and select a feature subspace; and

a model establishing unit, arranged to establish a fast human eye statistical model based on the feature subspace and an accurate human eye statistical model based on support vector machine (SVM) classification.

8. The device according to claim 7, wherein, the third extracting module is further arranged to: for the candidate human eye area, employ the fast human eye statistical model based on the feature subspace to perform a preliminary judgment of the left and right eye candidate areas; and further differentiate an area between two judgment thresholds set by the fast human eye statistical model by employing the accurate human eye statistical model based on the SVM classification, and acquire the left and right eye candidate areas respectively.

9. The device according to claim 8, wherein, the third extracting module is further arranged to: employ the fast human eye statistical model and the accurate human eye statistical model repeatedly to perform a multi-scale detection fusion for the candidate human eye area; and perform mass filtering processing to a fusion confidence map obtained by performing the multi-scale detection fusion to acquire a final confidence map as the left and right eye candidate areas.

10. The device according to any one of claims 6-9, wherein, the positioning module comprises:

a geometric position checking unit, arranged to check pairing on the left and right eye candidate areas in turn by reference to a face area, screen pairs of the left and right eyes in conformity with geometric constraints according to relative position and direction of the left and right eye candidate areas, and acquire confidences of both eyes in terms of distance and angle by calculation;

a template matching checking unit, arranged to perform template matching on the left and right eye candidate areas by using a predefined binocular template, and acquire a matching confidence; and

a calculation selecting unit, arranged to: in combination with the confidences of both eyes in terms of distance and angle and the matching confidence, select a position of a pair of left and right eyes in which a value of a product of three confidences is maximum, and take the position as a final position of the left and right eyes.

11. A computer-readable storage medium, storing program instructions to be executed for implementing the method according to any one of claims 1-5.

```
┌─────────────────────────────────────────────────────┐      S101
│                                                      │   ⟋
│              Acquire an input image                  │  ⟋
│                                                      │
└─────────────────────────────────────────────────────┘
                           │
                           ▼
┌─────────────────────────────────────────────────────┐      S102
│         Perform grayscale processing to the i        │   ⟋
│         mage to extract a grayscale feature          │  ⟋
│                                                      │
└─────────────────────────────────────────────────────┘
                           │
                           ▼
┌─────────────────────────────────────────────────────┐      S103
│    Extract a candidate human eye area in the image by │   ⟋
│  employing a center-periphery contrast filter algorithm│ ⟋
│         according to the grayscale feature            │
└─────────────────────────────────────────────────────┘
                           │
                           ▼
┌─────────────────────────────────────────────────────┐      S104
│       Extract the left and right eye candidate areas  │   ⟋
│       respectively from the candidate human eye area   │  ⟋
│     through a pre-created human eye statistical model  │
└─────────────────────────────────────────────────────┘
                           │
                           ▼
┌─────────────────────────────────────────────────────┐      S105
│      Check pairing on the left and right eye candidate │  ⟋
│   areas to determine the positions of left and right eyes│ ⟋
└─────────────────────────────────────────────────────┘
```

FIG. 1

Created a human eye statistical model — S100

Acquire an input image — S101

Perform grayscale processing to the image to extract a grayscale feature — S102

Extract a candidate human eye area in the image by employing a center-periphery contrast filter algorithm according to the grayscale feature — S103

Extract the left and right eye candidate areas respectively from the candidate human eye area through a pre-created human eye statistical model — S104

Check pairing on the left and right eye candidate areas to determine the positions of left and right eyes — S105

FIG. 2

Establish a human eye statistical model data set based on a collected image database containing human eyes — S1001

Perform normalization processing of data to the human eye statistical model data set — S1002

Map a data vector after the normalization processing to a feature space using a principal component analysis method, and select a feature subspace — S1003

Establish a fast human eye statistical model based on the feature subspace and an accurate human eye statistical model based on SVM classification — S1004

FIG. 3

Human face image

Center-periphery
contrast filter — 301

Human eye accurate
positioning — 302

Multi-scale detection
fusion — 303

Mass filtering — 304

Binocular geometric
position pairing checking — 305

Binocular template
pairing checking — 306

Positions of left and
right human eyes

FIG. 4

FIG. 5a

FIG. 5b

401

Image acquiring module

402

First extracting module

403

Second extracting module

404

Third extracting module

405

Positioning module

Device for positioning human eyes

FIG. 6

405

4051

Geometric position checking unit

4052

Template matching checking unit

4053

Calculation selecting unit

Positioning module

FIG. 7

Model creating module — 400

Image acquiring module — 401

First extracting module — 402

Second extracting module — 403

Third extracting module — 404

Positioning module — 405

Device for positioning
human eyes

FIG. 8

400

Data set establishing unit

Processing unit — 4001

Analysis selecting unit — 4002

Model establishing unit — 4003

Model creating module

FIG. 9

## INTERNATIONAL SEARCH REPORT

| International application No. |
| --- |
| PCT/CN2015/071504 |

**A. CLASSIFICATION OF SUBJECT MATTER**

G06K 9/00 (2006.01) i

According to International Patent Classification (IPC) or to both national classification and IPC

**B. FIELDS SEARCHED**

Minimum documentation searched (classification system followed by classification symbols)

G06K; H04N

Documentation searched other than minimum documentation to the extent that such documents are included in the fields searched

Electronic data base consulted during the international search (name of data base and, where practicable, search terms used)

CNTXT, DWPI, CNKI: eye detect locat position identify captur search recogniz judg study image picture photo area left eye right eye human face rotat segment partition extract feature vector region

**C. DOCUMENTS CONSIDERED TO BE RELEVANT**

| Category* | Citation of document, with indication, where appropriate, of the relevant passages | Relevant to claim No. |
| --- | --- | --- |
| X | CN 101196998 A (BEIJING ZHONGXING MICROELECTRONICS CO LT) 11 June 2008 (11.06.2008) claim 1 | 1, 6, 11 |
| A | CN 101196998 A (BEIJING ZHONGXING MICROELECTRONICS CO LT) 11 June 2008 (11.06.2008) claim 1 | 2-5, 7-10 |
| A | US 2005/0259873 A1 (SAMSUNG ELECTRONICS CO LTD) 24 November 2005 (24.11.2005) the whole document | 1-11 |
| A | US 2009/0087097 A1 (FUJI FILM CO LTD et al.) 02 April 2009 (02.04.2009) the whole document | 1-11 |
| A | US 2008/0118113 A1 (ELECTRONICS&TELECOM RES INST et al.) 22 May 2008 (22.05.2008) the whole document | 1-11 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 02 April 2015 | 16 April 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer DONG, Gang Telephone No. (86-10) 62411766 |
| --- | --- |

Form PCT/ISA /210 (second sheet) (July 2009)

INTERNATIONAL SEARCH REPORT
Information on patent family members

| International application No. |
| --- |
| PCT/CN2015/071504 |

| Patent Documents referred in the Report | Publication Date | Patent Family | Publication Date |
| --- | --- | --- | --- |
| CN 101196998 A | 11 June 2008 | CN 100578528 C | 06 January 2010 |
| US 2005/0259873 A1 | 24 November 2005 | KR 100552709 B1 | 20 February 2006 |
| | | US 8457363 B2 | 04 June 2013 |
| | | KR 20050111183 A | 24 November 2005 |
| US 2009/0087097 A1 | 02 April 2009 | JP 2009086703 A | 23 April 2009 |
| | | JP 4663699 B2 | 06 April 2011 |
| | | US 8290276 B2 | 16 October 2012 |
| US 2008/0118113 A1 | 22 May 2008 | KR 100809431 B1 | 05 March 2008 |
| | | US 7929734 B2 | 19 April 2011 |

Form PCT/ISA /210 (patent family annex) (July 2009)